# EUROPEAN PATENT SPECIFICATION

(11) **EP 2 186 687 B1**
(45) Date of publication and mention of the grant of the patent: **10.08.2011**
(21) Application number: 07822909.3
(22) Date of filing: 30.08.2007
(51) Int. Cl.: B60R 19/34, F16F 7/12

(54) **ENERGY ABSORBER FOR A VEHICLE BUMPER ASSEMBLY**
ENERGIEABSORBER FÜR EINE FAHRZEUGSTOSSFÄNGERANORDNUNG
ABSORBEUR D'ÉNERGIE POUR ENSEMBLE PARE-CHOCS DE VÉHICULES

(43) Date of publication of application: 19.05.2010
(73) Proprietor: Autotech Engineering, A.I.E., 48220 Abadiano (ES)
(72) Inventor: PERARNAU RAMOS, Francesc, E-08201 Sabadell (Barcelona) (ES); PUIT CASES, Lluís, E-08243 Manresa (Barcelona) (ES); PEIDRO APARICI, Julio, E-08025 Barcelona (ES)
(74) Representative: Gislon, Gabriele
(86) International application number: PCT/ES2007/000501
(87) International publication number: WO 2009/030781

(56) References cited:
- WO-A1-2007/086787
- DE-A1- 4 401 865
- GB-A- 884 953
- US-A- 5 876 077
- US-A1- 2005 253 403
- US-A1- 2006 022 473

## Description

### Technical Field

The present invention generally relates to an energy absorber for a vehicle bumper assembly, and more particularly to a high-performance energy absorber configured to provide a very high level of energy absorbed per millimeter of deformation in comparison with the performance of other absorbers of the prior art.

### Background of the Invention

Patent GB-A-884953 describes an energy absorber comprising a tube of a ductile metal, such as aluminium or copper, each end of which is connected to one and the other of a pair of thrust transmitting members, such that a relative movement of the thrust transmitting members in the axial direction of the tube bends the tube inside out over at least part of its length. In an embodiment, the tube of ductile metal is connected at one end to a longitudinal member of the main structure of a vehicle and at the other end to a rigid tube acting as a thrust member connected in turn to a bumper cross-member of the vehicle. The tube of ductile metal has a supporting configuration and a configuration favorable for deformation at the end connected with the rigid tube. Once deformed, the tube of ductile metal can be housed together with part of the rigid tube in a hollow interior of the longitudinal member of the main structure of the vehicle, thus taking advantage of all or most of the potential deformation run of the tube of ductile metal.

A drawback of the absorber of the mentioned patent GB-A-884953 is that the ductile metal of which the deformable tube is made can be too soft to absorb large amounts of energy, and in addition, manufacturing the deformable tube with a cylindrical shape and with said supporting configuration and configuration favorable for deformation from an ultra-high-strength steel could be complicated and expensive.

Document DE-A-4401865 discloses a vehicle bumper including a bumper crossbar and mechanical deformation elements arranged between said bumper crossbar and longitudinal supports of a vehicle. Each of said deformation elements is a bridge-shaped sheet metal element having two laterally opposite legs provided with local strength reductions. A drawback with this deformation element is that the two laterally opposite legs of the bridge-shaped deformation element provide irregular deformation properties depending on the direction of the forces acting against it.

Patent US-A-5876077 describes a bumper and front rail assembly including first and second front rails with a steel cross-member extending therebetween. The steel cross-member has a substantially U-shaped cross-section. A steel forward member is secured to the cross-member and spans the length thereof. The forward member is configured to act as a spring for elastic deformation against the cross-member in a low energy impact. First and second bridge-shaped steel crush cans are disposed in the cross-member adjacent the first and second front rails, respectively. Each of the bridge-shaped crush cans is provided with two opposite legs connected to the corresponding first or second front rail for improved energy management. However, this crush can also has the drawback of irregular deformation properties depending on the direction of the forces acting thereon due to the two laterally opposite legs of the bridge-shaped crush can.

### Disclosure of the Invention

The present invention contributes to solving the previous and other drawbacks by providing an energy absorber for a vehicle bumper assembly, of the type comprising a thrust transmitting section and a deformable section connected to one another, where said thrust transmitting section and said deformable section have respective opposite ends to be connected to a bumper cross-member of said bumper assembly of said vehicle and to a longitudinal member of a main structure of the vehicle, respectively, such that a relative movement of said bumper cross-member towards said longitudinal member is transmitted by the thrust transmitting section to the deformable section to cause a deformation thereof.

The energy absorber of the present invention is characterized in that said thrust transmitting section comprises at least one thrust transmitting member having an elongated configuration in the longitudinal direction of the vehicle and said deformable section comprises a first deformable member in the form of a bridge defining a first supporting configuration to which said thrust transmitting member is connected and at least two first legs which extend from said first supporting configuration substantially in the longitudinal direction of the vehicle, and a second deformable member in the form of a bridge defining a second supporting configuration connected to the first supporting configuration of said first deformable member and at least two second legs which extend from said second supporting configuration substantially in the longitudinal direction of the vehicle.

Said first and second deformable members are crossed such that the two first legs and the two second legs extend from the four sides of a quadrilateral formed by the first and second superimposed supporting configurations. In a preferred embodiment, the respective pairs of legs of the two deformable members extend from opposite sides of their respective supporting configurations. Each of the legs preferably has a deformation configuration for facilitating the deformation thereof.

According to an embodiment, the four legs of the deformable members have ends connected to a plate fixed to the end of the longitudinal member of the main structure of the vehicle, which has a hollow interior. The mentioned plate has an opening located between the legs of the deformable members, facing said hollow interior of the longitudinal member of the main structure of the vehicle and sized to allow the passage of the thrust transmitting section and the deformable section to the hollow interior of the longitudinal member. Thus, the thrust transmitting section and the deformable section can be housed in the hollow interior of the longitudinal member of the main structure of the vehicle when the deformable section is deformed in the longitudinal direction of the vehicle. By making the length of the thrust transmitting member substantially equal to or greater than the deformation run of the four legs of the deformable members, maximum advantage is taken of the energy absorption potential of the deformable section, since virtually the material in the entire length of the legs is subjected to deformation during the deformation run when the legs are completely deformed as a consequence of a force in the longitudinal direction of the vehicle.

In another embodiment, the four legs of the deformable members have ends directly connected to walls of the longitudinal member of the main structure of the vehicle around said hollow interior of the longitudinal member, such that the thrust transmitting section and the deformable section can likewise access the hollow interior of the longitudinal member when the deformable section is deformed in the longitudinal direction of the vehicle.

The construction of the deformable section by means of two crossed deformable members in the form of a bridge allows each deformable member to be obtained from a sheet metal element shaped by one or more of the typical sheet shaping processes, such as cutting, die cutting, bending, press forming and deep drawing, among others. The deformable members are preferably made of an ultra-high-strength steel (UHSS), for example, with an elastic limit stress from 600 to 1000 MPa and a breaking point stress between 800 and 1500 MPa, and with a thickness from 2 to 5 mm, shaped by progressive press forming in a die. The thrust transmitting member, which has a lower commitment, can be made, for example, from a cut-to-length extruded tube of medium steel with an elastic limit stress of about 300 MPa. Thus, the deformable members, the thrust transmitting member and optionally the plate can furthermore be attached by welding.

With this construction, an energy absorber is achieved which is provided with a very long deformation run, as a result of the capacity to be housed inside the hollow interior of the longitudinal member of the structure of the vehicle, and capable of providing a very high level of energy absorbed per length of deformation as a result of the high elastic limit of the deformable members, in comparison with the efficiency of other absorbers of the prior art.

### Brief Description of the Drawings

The previous and other features and advantages will be more fully understood from the following detailed description of several embodiments with reference to the attached drawings, in which:
Figure 1 is a perspective view of an energy absorber according to a first embodiment of the present invention installed in a vehicle bumper assembly;
Figures 2 and 3 are perspective views of deformable members forming part of the energy absorber of Figure 1;
Figure 4 is a perspective view of a thrust transmitting member forming part of the energy absorber of Figure 1;
Figure 5 is a perspective view of a plate forming part of the energy absorber of Figure 1;
Figure 6 is a perspective view of the components of Figures 2 to 5 assembled in a commercial presentation form of the energy absorber of Figure 1;
Figure 7 is a schematic side view of an energy absorber of the present invention installed in a vehicle bumper assembly in a situation prior to colliding with an obstacle;
Figure 8 is a schematic side view of the energy absorber of Figure 7 during the collision with an obstacle;
Figure 9 is a partially sectioned schematic side view of the energy absorber of Figure 7 in a situation after the collision with an obstacle;
Figure 10 is a perspective view of a deformable member similar to that of Figure 3 incorporating holes and notches for controlling the level of energy absorbed;
Figure 11 is a perspective view of an energy absorber according to a second embodiment of the present invention; and
Figure 12 is a perspective view of an energy absorber according to a third embodiment of the present invention.

### Detailed Description of Exemplary Embodiments

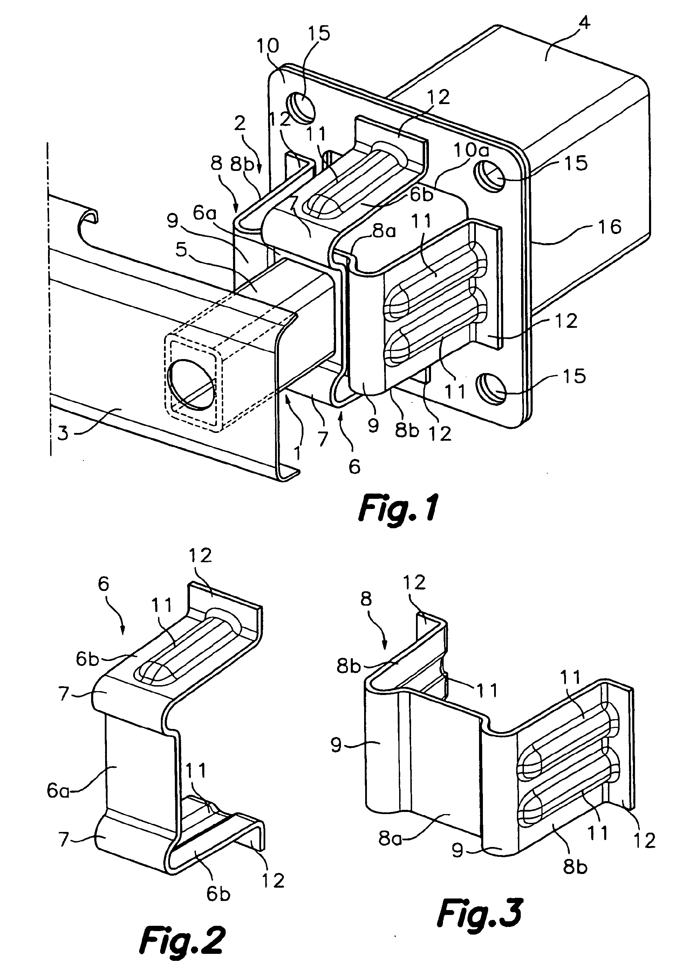

With reference first to Figures 1 to 6, an energy absorber for a vehicle bumper assembly according to a first embodiment of the present invention is described below, which comprises a thrust transmitting section 1 and a deformable section 2 connected to one another. The thrust transmitting section 1 has an end opposite to the deformable section 2 connected to a bumper cross-member 3 of the bumper assembly of the vehicle and the deformable section 2 has an end opposite to the thrust transmitting section 1 connected to a longitudinal member 4 of a main structure of the vehicle. Thus, in the event of a collision, a relative movement of the bumper cross-member 3 towards the longitudinal member 4 is transmitted by the thrust transmitting section 1 to the deformable section 2 causing a deformation thereof. The deformation of the deformable section 2 is capable of absorbing a large amount of the energy generated in the collision.

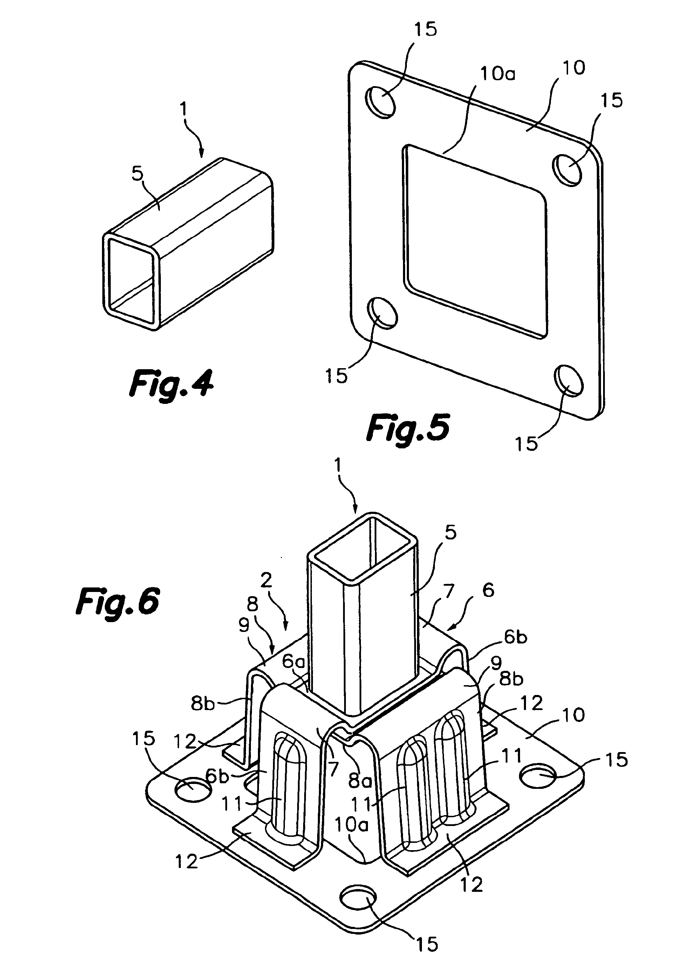

In this first embodiment, the thrust transmitting section 1 is formed by a thrust transmitting member 5 having an elongated configuration in the longitudinal direction of the vehicle, such as, for example, a segment of metal tube shown separately in Figure 4, and said deformable section 2 is made up of first and second deformable members 6, 8 in the form of a bridge shown separately in Figures 2 and 3, respectively, which are obtained from sheet metal elements. The mentioned first deformable member 6 (Figure 2) defines a first supporting configuration 6a to which the thrust transmitting member 5 is connected and two first legs 6b arranged substantially in the longitudinal direction of the vehicle extend from opposite sides of said first supporting configuration 6a. Similarly, the second deformable member 8 (Figure 3) defines a second supporting configuration 8a connected to the first supporting configuration 6a of said first deformable member 6 and two second legs 8b which extend from opposite sides of said second supporting configuration 8a substantially in the longitudinal direction of the vehicle. When the energy absorber is assembled, as shown in Figure 6, the first and second deformable members 6, 8 are crossed such that the two first legs 6b and the two second legs 8b extend from the four sides of a quadrilateral formed by the first and second superimposed supporting configurations 6a, 8a. Each of said first legs 6b has at least one first deformation configuration 7 for facilitating the deformation thereof and each of said second legs 8b has at least one second deformation configuration 9 for facilitating the deformation thereof, and furthermore, the two first legs 6b and the two second legs 8b are slightly inclined in directions diverging from their respective first and second supporting configurations 6a, 8a.

In the end farthest from the corresponding first or second supporting configuration 6a, 8a, each of the first and second legs 6b, 8b has formed therein a flange 12 bent in a direction transverse to the longitudinal direction of the vehicle, and said flanges 12 are attached to a plate 10, shown separately in Figure 5, which is likewise obtained from a sheet metal element. The mentioned plate 10 has a substantially square or rectangular configuration and is provided with an opening 10a in a central part, which is located between the first and second legs 6b, 8b of the first and second deformable members 6, 8 when the energy absorber is assembled, and holes 15 close to the corners. The attachments between the thrust transmitting member 5, the first and second deformable members 6, 8 and the plate 10 are obtained by welding to obtain the commercial presentation form of the energy absorber of the first embodiment of the present invention shown in Figure 6.

As shown in Figure 1, the longitudinal member 4 of the main structure of the vehicle has a hollow interior, and a structure plate 16 having a central opening facing said hollow interior and peripheral holes is fixed at the end of the longitudinal member 4. In an operative situation such as the one shown in Figure 1, the holes 15 of the plate 10 of the energy absorber are aligned with the holes of the structure plate 16 such that screw and nut assemblies (not shown) can be installed therethrough to fix the energy absorber to the longitudinal member 4, and the mentioned opening 10a of the plate 10 of the energy absorber is in coincidence with the opening of the structure plate 16 and in communication with the hollow interior of the longitudinal member 4. Furthermore, the opening 10a of the plate 10 and the opening of the structure plate 16 are sized to allow the passage of the thrust transmitting section 1 and the deformable section 2, whereby the thrust transmitting section 1 and the deformable section 2 of the energy absorber can pass through the opening 10a of the plate 10 and be progressively housed in the hollow interior of the longitudinal member 4 when the deformable section 2 is deformed in the longitudinal direction of the vehicle.

The first and second deformable members 6, 8 include several configurations which contribute to determining with relative precision the level of energy absorbed by the deformable members and the level of energy which is transmitted to the longitudinal member 4 of the main structure of the vehicle. Firstly, these configurations comprise the mentioned first and second deformation configurations 7, 9 formed in the first and second deformable members 6, 8, each of which comprises an arched portion between the corresponding first or second supporting configuration 6a, 8a and the corresponding first or second leg 6b, 8b. The radii of these deformation configurations 7, 9, as well as the remaining deep drawing radii, are defined to contribute to determining the direction of the deformation, the stress transmitted to the longitudinal member 4 and the level of energy absorbed. Furthermore, the first and second legs 6b, 8b include embossed ribs 11 arranged in the longitudinal direction of the vehicle. The size, amount, arrangement and depth of these ribs 11 are selected to contribute to determining the level of energy absorbed. The thickness and the type of material used in first and second deformable members 6, 8 also contributes to determining the behavior characteristics thereof. By way of example, the first and second deformable members 6, 8 can be made from ultra-high-strength sheet metal elements, for example, with an elastic limit stress from 600 to 1000 MPa, and with a thickness from 2 to 5 mm, and can be shaped by progressive press forming in a die. In contrast, the thrust transmitting member 5, given its lower commitment, can be made from a cut-to-length extruded tube of medium steel with an elastic limit stress of about 300 MPa which makes it a low-cost component.

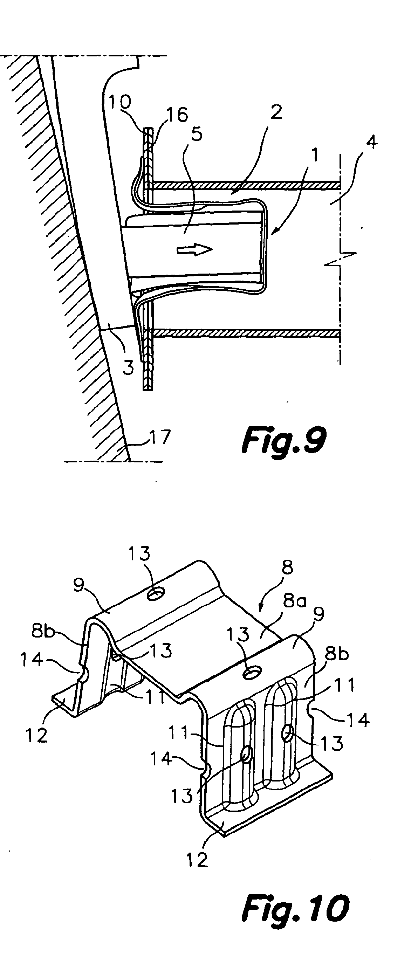

Figure 10 shows a variant of the second deformable member 8 incorporating holes 13 in the legs 8b and notches 14 formed in the side edges of the legs 8b. The number, size and configuration of these holes 13 and notches 14 are selected to contribute to determining the stress transmitted to the longitudinal member 4 and the level of energy absorbed. The holes 13 and notches 14 are optional and compatible with the first and second deformation configurations 7, 9 and with the ribs 11, as well as with other additional configurations, such as cuts.

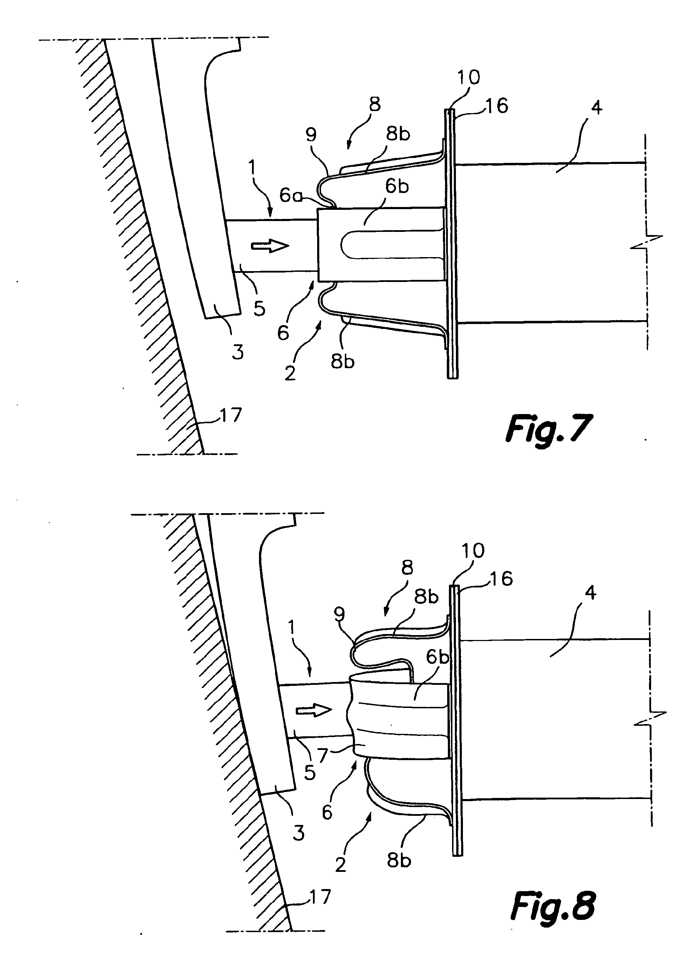

Figures 7, 8 and 9 show a sequence of views schematically showing an energy absorber of the present invention installed in an operative situation in a vehicle bumper system before, during and after a collision.

In Figure 7, the energy absorber is connected to the bumper cross-member 3 and to the longitudinal member 4 of the main structure of the vehicle, and the bumper cross-member 3 is at a distance from an obstacle 17.

In Figure 8, the bumper cross-member 3 has collided with the obstacle 17 and a relative movement of the bumper cross-member 3 with respect to the longitudinal member 4 of the main structure of the vehicle is occurring, and the force of the impact is transmitted by the thrust transmitting member 5 to the first and second deformable members 6, 8, which are being deformed and thus absorb part of the energy produced in the collision.

In Figure 9, the first and second deformable members 6, 8 are completely deformed and have been driven by the thrust transmitting member 5 to the hollow interior of the longitudinal member 4 of the main structure of the vehicle. It should be observed that the length of the thrust transmitting member 5 is substantially equal to or greater than the deformation run of the two first and second legs 6b, 8b of the first and second deformable members 6, 8 when such legs are completely deformed as a consequence of the force of the impact in the longitudinal direction of the vehicle. Thus, during the impact the energy absorber of the present invention takes advantage of substantially the entire potential deformation run of the first and second deformable members 6, 8 such that substantially all the points of the first and second deformable members 6, 8 have been deformed, therefore the energy absorber of the present invention provides a high efficiency.

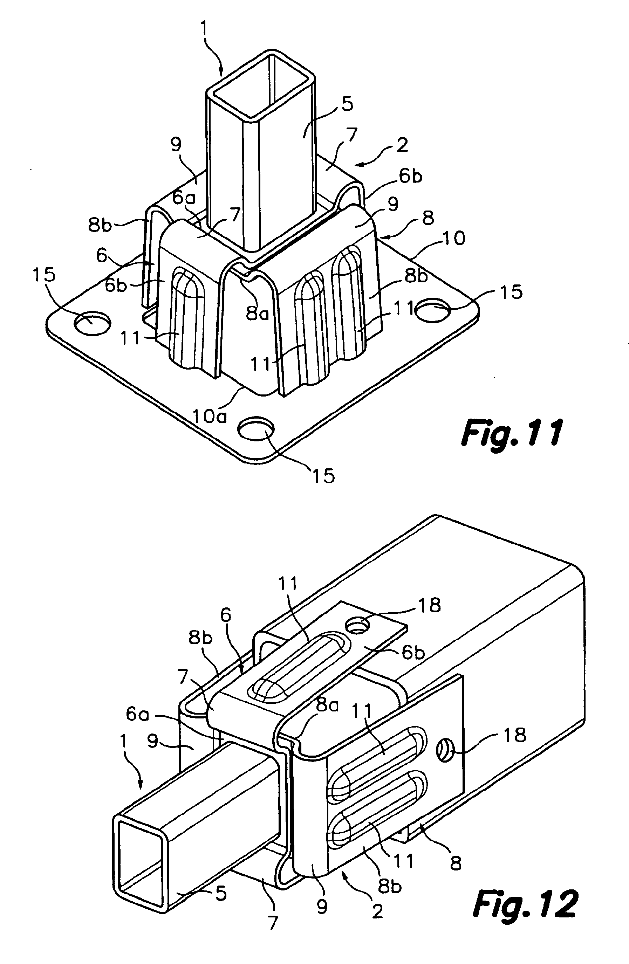

Figure 11 shows an energy absorber according to a second embodiment of the present invention, which is completely similar to the energy absorber of the first embodiment described in relation to Figures 1 to 6 except in that here the first and second legs 6b, 8b of the first and second deformable members 6, 8 do not end in bent flanges but rather they have ends farther from the, corresponding first and second supporting configuration 6a, 8a arranged in the longitudinal direction of the vehicle and are attached by butt-joint to the plate 10 by welding.

Figure 12 shows an energy absorber according to a third embodiment of the present invention, which is completely similar to the energy absorber of the first embodiment described in relation to Figures 1 to 6 except in that here the plate 10 has been dispensed with, and the first and second legs 6b, 8b of the first and second deformable members 6, 8 do not end in bent flanges but rather they have flat ends connected directly to walls of the longitudinal member 4 of the main structure of the vehicle arranged around said hollow interior of the longitudinal member 4. Thus, an opening in the end of the longitudinal member 4 allows the passage of the thrust transmitting section 1 and the deformable section 2 to the hollow interior of the longitudinal member 4. At the mentioned flat ends of the first and second legs 6b, 8b of the first and second deformable members 6, 8 there are formed holes 18 which in an operative situation are aligned with corresponding holes formed in the walls of the longitudinal member 4, such that screw and nut assemblies (not shown) can be installed through said holes to fix the energy absorber to the longitudinal member 4. Figure 12 shows the flat ends of the first and second legs 6b, 8b of the first and second deformable members 6, 8 arranged at the outer part of the longitudinal member 4 of the main structure of the vehicle. However, in an embodiment variant, not shown, the flat ends could be arranged at the inner part of the longitudinal member 4 with an equivalent result. In this third embodiment of the present invention, the commercial presentation of the energy absorber would only include the thrust transmitting member 5 and the first and second deformable members 6, 8 attached to one another.

In the previous embodiments, the first deformable member 6 is narrower than the second deformable member 8 and has a different number of ribs, however, it will be understood that both the first and second deformable members 6, 8 could be substantially identical, with only a slight difference in the length of the legs 6b, 8b to make up for the thickness of the sheet in the superimposed supporting configurations 6a, 8a. Likewise, although the thrust transmitting member 5 is shown as a tube with a substantially rectangular cross-section, it will be understood that it could have any other cross-section, such as square, polygonal, circular, etc.

Although in all the embodiments described and shown the deformable section 2 of the energy absorber is made up of two crossed deformable members 6, 8 having two legs 6b, 8b each, an energy absorber with a single deformable member provided with two or more legs would also fall within the field of the present invention. Likewise, an energy absorber with a deformable section made up of two or more deformable members, each having more than two legs or other combinations would also fall within the field of the present invention. In addition, although it is preferred that the deformable members 6, 8 are configured to be obtained from sheet steel elements shaped by press forming or deep drawing, the present invention is not limited thereto and the deformable members 6, 8 could be made in any other way which meets the requirements provided in the attached claims. Likewise, the deformation configurations 7, 9, the ribs 11, the holes 13 and the notches 14 are optional and can be combined with one another in variable number, shapes and sizes. The thrust transmitting portion 5 does not indispensably have to have a tubular shape and can have any other configuration providing sufficient rigidity.

A person skilled in the art will be able to carry out modifications and variations from the embodiments shown and described without departing from the scope of the present invention as it is defined in the attached claims.

## Claims

1. An energy absorber for a vehicle bumper assembly, of the type comprising a thrust transmitting section (1) and a deformable section (2) connected to one another, wherein said thrust transmitting section (1) and said deformable section (2) have respective opposite ends to be connected to a bumper cross-member (3) of said bumper assembly of said vehicle and to a longitudinal member (4) of a main structure of the vehicle, respectively, such that a relative movement of said bumper cross-member (3) towards said longitudinal member (4) is transmitted by the thrust transmitting section (1) to the deformable section (2) to cause a deformation thereof, **characterized in that** said thrust transmitting section (1) comprises at least one thrust transmitting member (5) having an elongated configuration in the longitudinal direction of the vehicle and said deformable section (2) comprises a first deformable member (6) in the form of a bridge defining a first supporting configuration (6a) to which said thrust transmitting member (5) is connected and at least two first legs (6b) which extend from said first supporting configuration (6a) substantially in the longitudinal direction of the vehicle, and a second deformable member (8) in the form of a bridge defining a second supporting configuration (8a) connected to the first supporting configuration (6a) of said first deformable member (6) and at least two second legs (8b) which extend from said second supporting configuration (8a) substantially in the longitudinal direction of the vehicle, wherein said first and second deformable members (6, 8) are crossed such that the two first legs (6b) and the two second legs (8b) extend from the four sides of a quadrilateral formed by the first and second superimposed supporting configurations (6a, 8a).

2. The absorber according to claim 1, **characterized in that** each of said first legs (6b) has at least one first deformation configuration (7) for facilitating the deformation thereof and each of said second legs (8b) has at least one second deformation configuration (9) for facilitating the deformation thereof.

3. The absorber according to claim 2, **characterized in that** the first deformable member (6) has two first legs (6b) which extend from opposite sides of the first supporting configuration (6a) and the second deformable member (8) has two second legs (8b) which extend from opposite sides of the second supporting configuration (8a).

4. The absorber according to claim 3, **characterized in that** the two first legs (6b) and the two second legs (8b) are slightly inclined in directions diverging from their respective first and second supporting configurations (6a, 8a).

5. The absorber according to any one of the previous claims, **characterized in that** the thrust transmitting section (1) and the deformable section (2) are configured to be housed in a hollow interior of the longitudinal member (4) of the main structure of the vehicle when the deformable section (2) is deformed in the longitudinal direction of the vehicle.

6. The absorber according to claim 5, **characterized in that** the length of the thrust transmitting member (5) is substantially equal to or greater than the deformation run of the two first and second legs (6b, 8b) of the first and second deformable members (6, 8) when they are completely deformed as a consequence of a force in the longitudinal direction of the vehicle.

7. The absorber according to any one of the previous claims, **characterized in that** the first and second legs (6b, 8b) of the first and second deformable members (6, 8) have ends connected to a plate (10) fixed to the end of the longitudinal member (4) of the main structure of the vehicle, said plate (10) having an opening (10a) located between the first and second legs (6b, 8b) of the first and second deformable members (6, 8), facing said hollow interior of the longitudinal member (4) of the main structure of the vehicle and sized to allow the passage of the thrust transmitting section (1) and the deformable section (2) to the hollow interior of the longitudinal member (4).

8. The absorber according to any one of claims 1 to 6, **characterized in that** the first and second legs (6b, 8b) of the first and second deformable members (6, 8) have ends connected directly to walls of the longitudinal member (4) of the main structure of the vehicle arranged around said hollow interior of the longitudinal member (4) to allow the passage of the thrust transmitting section (1) and the deformable section (2) to the hollow interior of the longitudinal member (4).

9. The absorber according to any one of claims 5 to 8, **characterized in that** each of said first and second deformation configurations (7, 9) of the first and second deformable members (6, 8) comprises an arched portion between the corresponding first or second supporting configuration (6a, 8a) and the corresponding first or second leg (6b, 8b), said arched portion being configured to contribute to determining the direction of the deformation, the stress transmitted to the longitudinal member (4) and the level of energy absorbed.

10. The absorber according to any one of claims 5 to 8, **characterized in that** at least one of the first and second legs (6b, 8b) includes at least one rib (11) in the longitudinal direction of the vehicle configured to contribute to determining the level of energy absorbed.

11. The absorber according to claim 7, **characterized in that** each of the first and second legs (6b, 8b) includes in its end farthest from the corresponding first or second supporting configuration (6a, 8a) a flange (12) bent in a direction transverse to the longitudinal direction of the vehicle for attachment to the plate (10).

12. The absorber according to claim 7, **characterized in that** each of the first and second legs (6b, 8b) has an end farther from the corresponding first or second supporting configuration (6a, 8a) arranged in the longitudinal direction of the vehicle for attachment by butt joint to the plate (10).

13. The absorber according to any one of the previous claims, **characterized in that** each of the first and second deformable members (6, 8) is configured to be obtained from a sheet metal element shaped by one or more sheet metal shaping processes selected from a group including cutting, die cutting, bending, press forming and deep drawing, among others, and **in that** the thrust transmitting member (5) is configured to be obtained from a metal tubular element.

14. The absorber according to any one of the previous claims, **characterized in that** the thrust transmitting member (5) is formed from a cut-to-length extruded tube of medium steel with an elastic limit stress of about 300 MPa.

15. The absorber according to any one of the previous claims, **characterized in that** the first and second deformable members (6, 8) are ultra-high-strength sheet steel elements with an elastic limit stress from 600 to 1000 MPa and with a thickness from 2 to 5 mm shaped by progressive press forming in a die.

## Patentansprüche

1. Energieaufnahmevorrichtung für eine Kraftfahrzeugstoßdämpferanordnung, der Art umfassend einen Stoßübertragungsabschnitt (1) und einen verformbaren Abschnitt (2), welche miteinander verbunden sind, wobei der genannte Stoßübertragungsabschnitt (1) und der genannte verformbare Abschnitt (2) jeweilige gegenüberliegende Enden aufweisen, welche mit einem Stoßdämpferquerelement (3) der genannten Stoßdämpferanordnung des genannten Kraftfahrzeugs und mit einem Längselement (4) einer Hauptstruktur des Kraftfahrzeugs jeweils zu verbinden sind, so dass eine relative Bewegung des genannten Stoßdämpferquerelements (3) zum genannten Längselement (4) hin von dem Stoßübertragungsabschnitt (1) zum verformbaren Abschnitt (2) übertragen wird, um eine Verformung desselben zu bewirken, **dadurch gekennzeichnet, dass** der genannte Stoßübertragungsabschnitt (1) zumindest ein Stoßübertragungselement (5) umfasst, welches eine längliche Ausbildung in Längsrichtung des Kraftfahrzeugs aufweist und dass der genannte verformbare Abschnitt (2) ein erstes verformbares Element (6) in Form einer Brücke umfasst, welches eine erste Tragausbildung (6a) definiert, mit welcher das genannte Stoßübertragungselement (5) verbunden ist und zumindest zwei erste Schenkeln (6b), welche sich von der genannten ersten Tragausbildung (6a) wesentlich in Längsrichtung des Kraftfahrzeugs erstrecken, und ein zweites verformbares Element (8) in Form einer Brücke, welches eine zweite Tragausbildung (8a) definiert, welche mit der ersten Tragausbildung (6a) des genannten ersten verformbaren Elements (6) verbunden ist und zumindest zwei zweite Schenkeln (8b), welche sich von der genannten zweiten Tragausbildung (8a) wesentlich in Längsrichtung des Kraftfahrzeugs erstrecken, wobei das genannte erste und zweite verformbare Element (6, 8) gekreuzt sind, so dass sich die beiden ersten Schenkel (6b) und die beiden zweiten Schenkel (8b) von den vier Seiten eines Vierecks erstrecken, welches von der ersten und zweiten Tragausbildung (6a, 8a), die überlagert sind, gebildet ist.

2. Aufnahmevorrichtung nach Anspruch 1, **dadurch gekennzeichnet, dass** jeder der genannten ersten Schenkeln (6b) zumindest eine erste Verformungsausbildung (7) aufweist, um die Verformung derselben zu erleichtern und dass jeder der genannten zweiten Schenkeln (8b) zumindest eine zweite Verformungsausbildung (9) aufweist, um die Verformung derselben zu erleichtern.

3. Aufnahmevorrichtung nach Anspruch 2, **dadurch gekennzeichnet, dass** das erste verformbare Element (6) zwei erste Schenkel (6b) aufweist, welche sich von gegenüberliegenden Seiten der ersten Tragausbildung (6a) erstrecken und dass das zweite verformbare Element (8) zwei zweite Schenkel (8b) aufweist, welche sich von gegenüberliegenden Seiten der zweiten Tragausbildung (8a) erstrecken.

4. Aufnahmevorrichtung nach Anspruch 3, **dadurch gekennzeichnet, dass** die beiden ersten Schenkel (6b) und die beiden zweiten Schenkel (8b) leicht in Richtungen geneigt sind, welche von ihrer jeweiligen ersten und zweiten Tragausbildung (6a, 8a) divergieren.

5. Aufnahmevorrichtung nach einem der vorhergehenden Ansprüche, **dadurch gekennzeichnet, dass** der Stoßübertragungsabschnitt (1) und der verformbare Abschnitt (2) so ausgebildet sind, um in einem Innenhohlraum des Längselements (4) der Hauptstruktur des Kraftfahrzeugs aufgenommen zu werden, wenn der verformbare Abschnitt (2) in Längsrichtung des Kraftfahrzeugs verformt wird.

6. Aufnahmevorrichtung nach Anspruch 5, **dadurch gekennzeichnet, dass** die Länge des Stoßübertragungselements (5) wesentlich gleich oder größer als die Verformungsstrecke der beiden ersten und zweiten Schenkeln (6b, 8b) des ersten und zweiten verformbaren Elements (6, 8) ist, wenn diese aufgrund einer Kraft in Längsrichtung des Kraftfahrzeugs ganz verformt sind.

7. Aufnahmevorrichtung nach einem der vorhergehenden Ansprüche, **dadurch gekennzeichnet, dass** die erste und zweite Schenkel (6b, 8b) des ersten und zweiten verformbaren Elements (6, 8) Enden aufweisen, welche mit einer Platte (10) verbunden sind, die mit dem Ende des Längselements (4) der Hauptstruktur des Kraftfahrzeugs befestigt ist, wobei die genannte Platte (10) eine Öffnung (10a) aufweist, welche sich zwischen den ersten und zweiten Schenkeln (6b, 8b) des ersten und zweiten verformbaren Elements (6, 8) befindet, die dem genannten Innenhohlraum des Längselements (4) der Hauptstruktur des Kraftfahrzeugs zugewandt ist und so dimensioniert ist, dass sie den Durchgang des Stoßübertragungsabschnitts (1) und des verformbaren Abschnitts (2) zum Innenhohlraum des Längselements (4) ermöglicht.

8. Aufnahmevorrichtung nach einem der Ansprüche 1 bis 6, **dadurch gekennzeichnet, dass** die erste und zweite Schenkel (6b, 8b) des ersten und zweiten verformbaren Elements (6, 8) Enden aufweisen, welche unmittelbar mit Wänden des Längselements (4) der Hauptstruktur des Kraftfahrzeugs verbunden sind, die um den Innenhohlraum des Längselements (4) angeordnet sind, um den Durchgang des Stoßübertragungsabschnitts (1) und des verformbaren Abschnitts (2) zum Innenhohlraum des Längselements (4) zu ermöglichen.

9. Aufnahmevorrichtung nach einem der Ansprüche 5 bis 8, **dadurch gekennzeichnet, dass** jede der genannten ersten und zweiten Verformungsausbildung (7, 9) des ersten und zweiten verformbaren Elements (6, 8) einen bogenförmigen Teil zwischen der entsprechenden ersten oder zweiten Tragausbildung (6a, 8a) und des entsprechenden ersten oder zweiten Schenkels (6b, 8b) umfasst, wobei der genannte bogenförmige Teil so ausgebildet ist, zur Bestimmung der Verformungsrichtung, der zum Längselement (4) übertragenen Belastung und des Niveaus aufgenommener Energie beizutragen.

10. Aufnahmevorrichtung nach einem der Ansprüche 5 bis 8, **dadurch gekennzeichnet, dass** zumindest einer von den ersten und zweiten Schenkeln (6b, 8b) zumindest eine Rippe (11) in Längsrichtung des Kraftfahrzeugs enthält, welche dazu ausgebildet ist, zur Bestimmung des Niveaus aufgenommener Energie beizutragen.

11. Aufnahmevorrichtung nach Anspruch 7, **dadurch gekennzeichnet, dass** jeder der ersten und zweiten Schenkeln (6b, 8b) an seinem von der entsprechenden ersten oder zweiten Tragausbildung (6a, 8a) am weitest liegenden Ende einen Flansch (12) enthält, welcher in eine zur Längsrichtung des Kraftfahrzeugs transversalen Richtung gebogen ist, um an die Platte (10) angebracht zu werden.

12. Aufnahmevorrichtung nach Anspruch 7, **dadurch gekennzeichnet, dass** jeder der ersten und zweiten Schenkeln (6b, 8b) ein Ende aufweist, welches weiter in Bezug auf die entsprechende erste oder zweite Tragausbildung (6a, 8a) liegt, und in der Längsrichtung des Kraftfahrzeugs angeordnet ist, um an die Platte (10) durch Stumpfnaht angebracht zu werden.

13. Aufnahmevorrichtung nach einem der vorhergehenden Ansprüche, **dadurch gekennzeichnet, dass** jedes der ersten und zweiten verformbaren Elementen (6, 8) dazu ausgebildet ist, um aus einem Metallblechelement erhalten zu werden, welches durch ein oder mehrere Metallblechumformungsprozesse, ausgewählt aus der Gruppe, bestehend aus Ausschneiden, Ausstanzen, Biegen, Formpressen und Tiefziehen, unter anderen, erhalten wird und dass das Stoßübertragungselement (5) dazu ausgebildet ist, um aus einem rohrförmigen Metallelement erhalten zu werden.

14. Aufnahmevorrichtung nach einem der vorhergehenden Ansprüche, **dadurch gekennzeichnet, dass** das Stoßübertragungselement (5) aus einem abgelängten extrudierten Rohr aus halbhartem Stahl mit einer elastischen Grenzbelastung von ca. 300 MPa gebildet ist.

15. Aufnahmevorrichtung nach einem der vorhergehenden Ansprüche, **dadurch gekennzeichnet, dass** das erste und zweite verformbare Element (6, 8) ultrahochfeste Stahlblechelemente mit einer elastischen Grenzbelastung von 600 bis 1000 MPa und mit einer Dicke von 2 bis 5 mm sind, welche durch progressives Formpressen in einer Form geformt werden.

## Revendications

1. Un absorbeur d'énergie pour un ensemble de pare-chocs d'un véhicule du genre comportant une section de transmission de poussée (1) et une section déformable (2) reliée entre elles, dans lequel cette section de transmission de poussée (1) et cette section déformable (2) ont des extrémités opposées respectives pour être reliées à un membre transversal du pare-chocs (3) de cet ensemble de pare-chocs de ce véhicule et à un membre longitudinal (4) d'une structure principale de ce véhicule, respectivement, de sorte qu'un mouvement relatif de ce membre transversal du pare-chocs (3) vers ce membre longitudinal (4) est transmis par la section de transmission de poussée (1) à la section déformable (2) pour y former une déformation, **caractérisé en ce que** cette section de transmission de poussée (1) comporte au moins un membre de transmission de poussée (5) ayant une configuration allongée en sens longitudinal du véhicule et cette section déformable (2) comporte un premier membre déformable (6) ayant la forme d'un pont définissant une première configuration de support (6a) à laquelle ce membre de transmission de poussée (5) est relié et au moins deux premières pattes (6b) s'étendant de cette première configuration de support (6a) sensiblement en sens longitudinal du véhicule, et un deuxième membre déformable (8) ayant la forme d'un pont définissant une deuxième configuration de support (8a) reliée à une première configuration de support (6a) de ce premier membre déformable (6) et au moins deux deuxièmes pattes (8b) s'étendant de cette deuxième configuration de support (8a) sensiblement dans le sens longitudinal du véhicule dans lequel ces premier et deuxième membres déformables (6,8) sont croisés de sorte que les deux premières pattes (6b) et les deux deuxièmes pattes (8b) s'étendent des quatre côtés du quadrilatère formé par les première et deuxième configurations de support superposées (6a, 8a).

2. L'absorbeur conformément à la revendication 1, **caractérisé en ce que** chacune de ces premières pattes (6b) a au moins une première configuration de déformation (7) pour en faciliter la déformation et chacune de ces deuxièmes pattes (8b) ont au moins une deuxième configuration de déformation (9) pour en faciliter la déformation.

3. L'absorbeur conformément à la revendication 2, **caractérisé en ce que** le premier membre déformable (6) a deux premières pattes (6b) s'étendant des côtés opposés de la première configuration de support (6a) et le deuxième membre déformable (8) a deux deuxièmes pattes (8b) s'étendant des côtés opposés de la deuxième configuration de support (8a).

4. L'absorbeur conformément à la revendication 3, **caractérisé en ce que** les deux premières pattes (6b) et les deux deuxièmes pattes (8b) sont légèrement inclinées dans des sens divergeant de leurs respectives première et deuxième configurations de support (6a, 8a).

5. L'absorbeur conformément à une quelconque des revendications précédentes, **caractérisé en ce que** la section de transmission de la poussée (1) et la section déformable (2) sont configurées pour être logées à dans un intérieur creux du membre longitudinal (4) de la structure principale du véhicule lorsque la section déformable (2) est déformée dans le sens longitudinal du véhicule.

6. L'absorbeur conformément à l'article 5, **caractérisé en ce que** la longueur du membre de transmission de la poussée (5) est sensiblement égale ou plus grande que l'étendue de la déformation des deux première et deuxième pattes (6b, 8b) des premier et deuxième membres déformables (6,8) lorsqu'ils sont complètement déformés suite à une force dans le sens longitudinal du véhicule.

7. L'absorbeur conformément à une quelconque des revendications précédentes, **caractérisé en ce que** les première et deuxième pattes (6b, 8b) des premier et deuxième membres déformables (6,8) ont des extrémités reliées à une plaque (10) fixée à l'extrémité du membre longitudinal (4) de la structure principale du véhicule, cette plaque (10) ayant une ouverture (10a) située entre les première et deuxième pattes (6b, 8b) des premier et deuxième membres déformables (6,8), faisant face à cet intérieur creux du membre longitudinal (4) de la structure principale du véhicule et ayant une taille lui permettant de passer par la section de transmission de poussée (1) et la section déformable (2) à l'intérieur creux du membre longitudinal (4).

8. L'absorbeur conformément à une quelconque des revendications 1 à 6, **caractérisé en ce que** les première et deuxième pattes (6b, 8b) des premier et deuxième membres déformables (6, 8) ont des extrémités reliées directement aux parois du membre longitudinal (4) de la structure principale du véhicule aménagée autour de cet intérieur creux du membre longitudinal (4) pour permettre le passage de la section de transmission de poussée (1) et la section déformable (2) à l'intérieur creux du membre longitudinal (4).

9. L'absorbeur conformément à une quelconque des revendications 5 à 8, **caractérisé en ce que** chacune de ces première et deuxième configurations de déformation (7,9) des premier et deuxième membres déformables (6, 8) comporte une portion voûtée entre la première ou deuxième configuration de support (6a, 8a) correspondantes et la première ou deuxième patte correspondante (6b, 8b), cette portion voûtée étant configurée pour contribuer à déterminer le sens de la déformation, l'effort transmis au membre longitudinal (4) et le niveau d'énergie absorbée.

10. L'absorbeur conformément à une quelconque des revendications 5 à 8, **caractérisé en ce qu'**au moins une des première et deuxième pattes (6b, 8b) comporte au moins une nervure (11) dans le sens longitudinal du véhicule configurée pour contribuer à déterminer le niveau d'énergie absorbée.

11. L'absorbeur conformément à la revendication 7, **caractérisé en ce que** chacune des première et deuxième pattes (6b, 8b) comportent à son extrémité la plus éloignée de la première ou deuxième configuration de support (6a, 8a) correspondante, une bride (12) pliée en sens transversal au sens longitudinal du véhicule pour le rattacher à la plaque (10).

12. L'absorbeur conformément à la revendication 7, **caractérisé en ce que** chacune des première et deuxième pattes (6b, 8b) possède une extrémité plus éloignée de la première ou deuxième configuration de support correspondante (6a, 8a) agencée en sens longitudinal du véhicule pour le rattacher par joint bout-à-bout à la plaque (10).

13. L'absorbeur conformément à une quelconque des revendications précédentes **caractérisé en ce que** chacun des premier et deuxième membres déformables (6,8) est configuré pour être obtenu d'un élément en tôle formé par un ou plusieurs des procédés de façonnage de tôle choisi d'un groupe comportant la découpe, le découpage à l'emporte pièce, le pliage, le formage à la presse et l'emboutissage profond, entre autres, et **en ce que** le membre de transmission de poussée (5) est configuré pour être obtenu d'un élément tubulaire métallique.

14. L'absorbeur conformément à une quelconque des revendications précédentes, **caractérisé en ce que** le membre de transmission de poussée (5) est formé par un tuyau extrudé coupé sur la longueur en acier moyen ayant une limite élastique de l'effort d'environ 300 MPa.

15. L'absorbeur conformément à une quelconque des revendications précédentes **caractérisé en ce que** les premier et deuxième membres déformables (6,8) sont des éléments en tôle ultra résistante ayant une limite d'élasticité à l'effort de 600 à 1000 MPa et une épaisseur de 2 à 5 mm façonnée par formage progressif par presse à l'emporte pièce.
